(19) **Europäisches Patentamt**

**European Patent Office**

**Office européen des brevets**

(11) **EP 1 215 103 B1**

(12) **EUROPÄISCHE PATENTSCHRIFT**

(45) Veröffentlichungstag und Bekanntmachung des Hinweises auf die Patenterteilung:
**09.02.2005 Patentblatt 2005/06**

(51) Int Cl.7: **B62D 6/00**

(21) Anmeldenummer: **01129567.2**

(22) Anmeldetag: **12.12.2001**

(54) **Regelung des dynamischen Verhaltens eines Fahrzeugs um eine definierte Achse**

Control of the dynamic movement of a vehicle around a defined axis

Commande du déplacement dynamique d'un véhicule par rapport à un axe défini

(84) Benannte Vertragsstaaten:
**DE FR GB IT SE**

(30) Priorität: **13.12.2000 DE 10061966**

(43) Veröffentlichungstag der Anmeldung:
**19.06.2002 Patentblatt 2002/25**

(73) Patentinhaber: **Deutsches Zentrum für Luft- und Raumfahrt e.V.**
**51147 Köln (DE)**

(72) Erfinder:
• **Güvenc, Levent, Prof.**
**D7, Atasehir-Kadiköy, Istanbul (TK)**
• **Bünte, Tilman, Dr.**
**81373 München (DE)**

• **Aksun-Güvenc, Bilin, Dipl.-Ing.**
**D7, Atasehir-Kadiköy, Istanbul (TK)**
• **Odenthal, Dirk, Dipl.-Ing.**
**80689 München (DE)**

(74) Vertreter: **von Kirschbaum, Albrecht, Dipl.-Ing.**
**Patentanwalt,**
**Postfach 15 20**
**82102 Germering (DE)**

(56) Entgegenhaltungen:
**EP-A- 0 275 744     DE-A- 3 734 477**
**DE-A- 19 515 055    DE-A- 19 751 227**
**DE-C- 4 226 746     US-A- 5 251 135**
**US-A- 5 703 775**

**Beschreibung**

Die Erfindung befaßt sich allgemein mit der Regelung des dynamischen Verhaltens eines Fahrzeugs um eine definierte Achse. Ein Anwendungsfall ist die Regelung des Lenkverhaltens eines Straßenfahrzeugs bei Anwesenheit unerwünschter Giereinflüsse auf dieses.

Gefährliche Fahrsituationen eines Straßenfahrzeugs (beispielsweise Schleudern) können von unerwarteten Gierstörmomenten herrühren, die beispielsweise durch plötzlichen Seitenwind, durch einseitigen Druckverlust in den Reifen oder durch Bremsen auf einseitig rutschigem Untergrund (sogenanntes μ-split Bremsen) hervorgerufen werden können. Der Fahrer kann in der Regel nicht angemessen auf solche Gierstörungen reagieren. Insbesondere ist mit einer Überreaktion des Fahrers zu rechnen, die die Gefährlichkeit der Fahrsituation noch verschärfen kann. Zur Unterstützung des Fahrers bei der Lenkung des Fahrzeugs sind daher Systeme entwickelt worden, die bei Auftreten unerwarteter, plötzlicher Abweichungen vom Wunschgierverhalten einen Lenkeingriff vornehmen, bei dem der vom Fahrer kommandierte Radlenkwinkel um ein von der Stärke der Abweichung vom Wunschgierverhalten abhängiges Maß verändert wird, also ein zusätzlicher (positiver oder negativer) Korrekturradlenkwinkel aufgebracht wird. Der Lenkeingriff erfolgt so, daß ein der Abweichung vom Wunschgierverhalten entgegenwirkendes, das Fahrzeug stabilisierendes Moment erzeugt wird. Unter dem Begriff "unerwünschte Gierbewegungen" wird jede Abweichung des Ist-Gierverhaltens vom Wunschgierverhalten verstanden.

Bei derartigen aktiven Lenkunterstützungssystemen ist es bekannt, die Ist-Gierrate des Fahrzeugs zu messen und sie mit einer Soll-Gierrate zu vergleichen, welche aus dem vom Fahrer eingestellten Drehwinkel des Lenkrads abgeleitet wird. Die Differenz zwischen Ist- und Soll-Gierrate wird in einen Regler eingegeben, der abhängig von dieser Regeldifferenz den Lenkeingriff steuert. Beispielhaft wird diesbezüglich auf EP 0 474 130 A2, EP 0 614 795 B1 und EP 0 846 610 A2 verwiesen. Die in diesen Dokumenten beschriebenen Lenkunterstützungssysteme beruhen auf dem Prinzip der sogenannten robusten einseitigen Entkopplung der Gierbewegung des Fahrzeugs von dessen Seitenbewegung.

Aus der EP 0 916 568 A2 ist ein Aktuator zum Erzeugen eines zusätzlichen Lenkwinkels für Straßenfahrzeuge bekannt. Zum Erzeugen eines zusätzlichen Lenkwinkels für ein Fahrzeug wird dabei mittels eines Aktuators, der einen von einem Mikroprozessor gesteuerten, als Antrieb wirkenden Elektromotor und ein mittels des Elektromotors angetriebenes Getriebe aufweist, an die Räder des Fahrzeugs ein zusätzlicher Lenkwinkel an die Fahrzeugachse aufgebracht.

Aus der EP 1 000 838 A2 ist ein Verfahren zur Regelung der Querdynamik eines Fahrzeugs mit Vorderachslenkung bekannt. Bei diesem Verfahren wird anhand eines linearen Fahrzeugmodells, das ein dynamisches Wunschverhalten des Fahrzeuges repräsentiert, ein erster Sollwert für die Giergeschwindigkeit ermittelt, der dem durch Betätigung eines Steuerorgans eingesteuerten Fahrerwunsch entspricht. Unter der Nebenbedingung, daß der Schwimmwinkel im Bereich der nicht gelenkten Hinterräder des Fahrzeugs einen begrenzten Wert nicht überschreiten soll, wird ein weiterer Sollwert ermittelt, und es wird der dem Betrage nach kleinere dieser beiden Sollwerte als der für die Regelung maßgebliche Sollwert der Giergeschwindigkeit genutzt und dadurch ein Schleudern des Fahrzeugs mit hoher Zuverlässigkeit vermieden.

Aus der DE 197 51 227 A1 ist ein Lenksystem für ein Kraftfahrzeug mit wenigstens einem lenkbaren Rad, einem Stellantrieb und einem Überlagerungsgetriebe bekannt. Durch das Überlagerungsgetriebe wird die durch das Fahrzeug initiierte Lenkbewegung und die durch den Stellantrieb initiierte Bewegung zur Erzeugung der Lenkbewegung des lenkbaren Rades überlagert. Dabei wird die Gierbewegung des Fahrzeugs erfaßt und bei Vorliegen eines bestimmten Fahrzeugzustands ein Steuersignal abhängig von diesem Giersignal gebildet. Der Stellantrieb wird dann zur Initiierung der Bewegung durch das erzeugte Steuersignal angesteuert. Weiterhin wird eine den Bremszustand des Fahrzeugs repräsentierende Bremsgröße erfaßt und das Vorliegen des Fahrzeugzustands abhängig von dieser Bremsgröße bestimmt. Diese Technik ermittelt einen aktiven Lenkeingriff zur Verbesserung des Gierverhaltens, der ereignisgesteuert nur dann eingeschaltet wird, wenn eine äußere Störung der Fahrzeugbewegung detektiert wird.

Aus der US 5,696,681 ist es bekannt, den Reifendruck eines Fahrzeugs zu überwachen, um Reifenpannen unverzüglich zu erfassen. Ein Druckabfall wird als Reifenpannen-Ereignissignal ausgegeben, um abhängig von diesem Ereignis eine radselektive Bremsbetätigung auszuüben.

Auch wenn der Stand der Technik im Zusammenhang mit straßengebundenen Fahrzeugen erläutert wird, treten ähnliche Probleme bei anderen Fahrzeugen (Schiffe, Flugzeuge, usw.) bezüglich sämtlicher dort möglicher Freiheitsgrade (Rollen, Nicken, Gieren, usw.) auf. Ein Beispiel für eine plötzliche Gierstörung bei einem Flugzeug ist der einseitige Triebwerksausfall, der durch Verstellung des Seitenruders ausgeregelt werden muß.

In der Regelungstechnik ist unter den Begriffen "Disturbance Observer", "Model Regulator" oder "Two Degree of Freedom Controller" eine Regelungsstruktur mit zwei Entwurfsfreiheitsgraden bekannt, die bei einer Reihe von Regelungsaufgaben in der Antriebstechnik erfolgreich eingesetzt wurde, um ein System unempfindlich sowohl im Führungsverhalten gegenüber Modellierungsfehlern als auch gegenüber äußeren Störungen zu machen (vgl. K. Ohnishi et. al., "Microprocessor Controlled DC Motor for Load Insensitive Position Servo System", IEEE Tr. Industrial Electronics, Vol. IE-34, S. 44-49, 1987).

Ausgehend von diesem Stand der Technik ist es Aufgabe der vorliegenden Erfindung, eine Regelung zur Fahrzeugsteuerung zu schaffen, die hinsichtlich Störunterdrückung und Führungsverhalten Vorteile gegenüber dem Stand der Technik aufweist.

Diese Aufgabe wird erfindungsgemäß durch die Merkmale der unabhängigen Ansprüche 1 und 10 gelöst.

Allgemein sieht die Erfindung gemäß Anspruch 1 eine geregelte Einrichtung zur Steuerung des dynamischen Verhaltens eines Fahrzeugs um eine definierte Achse vor. Hierbei weist die Einrichtung auf:

- ein Betätigungsorgan zum Ansteuern eines verstellbaren Steuerelements (beispielsweise durch einen Benutzer), wobei das Betätigungsorgan mit dem Steuerelement über einen Steuerübertragungsstrang verbunden ist und das Steuerelement das Verhalten (Gieren, Nicken, Rollen, Wanken, usw.) des Fahrzeugs um die definierte Achse beeinflußt,
- einen Sensor zur Erfassung eines für die Stellung des Steuerelements repräsentativen Stellsignals, und
- einen Sensor zur Erfassung der Drehrate des Fahrzeugs um die definierte Achse,
- einen Regler , in welchem die Bildung eines theoretischen Stellsignals mittels Filterung der erfassten Drehrate mit der Inversen eines Modells implementiert ist, wobei dieses Modell abhängig von der Fahrzeuggeschwindigkeit ist, und ein gewünschtes dynamisches Verhalten der Drehrate des Fahrzeugs um die definierte Achse in Abhängigkeit von der Stellung des Steuerelements beschreibt und in welchem Regler durch Differenzbildung des Stellsignals mit dem theoretischen Stellsignal die Erzeugung eines Korrektursignals und die Rückführung dieses Korrektursignals auf den Steuerübertragungsstrang implementiert ist.

Weiter sieht die Erfindung als eine Einsatzmöglichkeit der geregelten Einrichtung nach Anspruch 1 eine Lenkeinrichtung für ein Straßenfahrzeug vor, das aufweist

- ein (beispielsweise von einem Fahrer des Fahrzeugs bedienbares) über einen als Steuerungsübertragungsstrang dienenden Lenkübertragungsstrang mit mindestens einem gelenkten Rad des Fahrzeugs verbundenes Lenkbetätigungsorgan,
- eine Gierratenerfassungseinrichtung, welche ein für die Gierrate des Fahrzeugs repräsentatives Gierratensignal bereitstellt,
- eine Radlenkwinkelerfassungseinrichtung, welche Radlenkwinkelinformationen über den Radlenkwinkel des gelenkten Rads bereitstellt, und
- eine auf das Gierratensignal und die Radlenkwinkelinformationen ansprechende und auf den Lenkübertragungsstrang einwirkende Regeleinrichtung, welche dazu eingerichtet ist, bei Auftreten unerwünschter Gierbewegungen des Fahrzeugs einen fahrerunabhängigen Lenkeingriff im Sinne einer Reduzierung dieser Gierbewegungen zu bewirken.

Erfindungsgemäß ist dabei vorgesehen, daß die Regeleinrichtung einen von dem Gierratensignal und den Radlenkwinkelinformationen gespeisten Regler in Form eines IMZF (Inverse Modellfolgeregelung mit zwei Freiheitsgraden)-Reglers umfaßt, welcher ein für die unerwünschten Gierbewegungen repräsentatives Radlenkwinkelkorrektursignal bereitstellt, in dem Regler zur Filterung des Gierratensignals die Inverse eines Modells der Gierdynamik implantiert ist, welches abhängig von der Fahrzeuggeschwindigkeit ist, und welches eine gewünschte dynamische Abhängigkeit der Gierrate des Fahrzeugs vom Radlenkwinkel des gelenkten Rads beschreibt, und die Regeleinrichtung dazu eingerichtet ist, den Lenkeingriff in Abhängigkeit von dem Radlenkwinkelkorrektursignal zu bewirken.

Bei der erfindungsgemäßen Lösung wird also ein hier als IMZF-Regler bezeichnetes regelungstechnisches Element verwendet, um aus dem Gierratensignal und den Radlenkwinkelinformationen bzw. dem Radlenkwinkelsignal ein Radlenkwinkelkorrektursignal zu ermitteln, anhand dessen der Lenkeingriff durchgeführt wird. Der IMZF-Regler ermittelt aus dem Gierratensignal eine Abschätzung des theoretischen Radlenkwinkels, der unter Zugrundelegung einer Wunschlenkübertragungsfunktion zu der aktuellen Gierrate des Fahrzeugs führen würde.

Dieser theoretische Radlenkwinkel wird mit dem durch das Radlenkwinkelsignal angegebenen tatsächlichen Radlenkwinkel verglichen. Der Vergleich liefert das Radlenkwinkelkorrektursignal. Dieses ist ein Maß für die Stärke der Abweichung vom Wunschgierverhalten und repräsentiert einen Korrekturradlenkwinkel, um den der Radlenkwinkel zur Behebung der Abweichung vom Wunschgierverhalten zu korrigieren ist. Zur Ermittlung des theoretischen Radlenkwinkels ist in dem IMZF-Regler die Inverse eines Sollmodells implementiert, das eine gewünschte Gierdynamik des Fahrzeugs in Abhängigkeit des mittels des Lenkbetätigungsorgans (beispielsweise durch den Fahrer) kommandierten Radlenkwinkels beschreibt.

Die Regelungseinrichtung mit dem IMZF-Regler arbeitet so, daß das Fahrzeug in seinem tatsächlich gezeigten Gierverhalten diesem Wunschgierverhalten möglichst folgt. Dies erlaubt es dem Konstrukteur oder Entwickler (gegebenenfalls sogar dem Fahrer selbst), über die konkrete Auslegung des Sollmodells das Gierverhalten des Fahrzeugs individuell, beispielsweise abhängig vom Fahrzeugtyp oder nach speziellen Bedürfnissen des Fahrers, festzulegen. Dabei ist es sogar vorstellbar, zwei oder mehr unterschiedliche Sollmodelle, beispielsweise mit unterschiedlichen Modellparametem, die zu unterschiedlichem Fahrverhalten führen, zu implementieren und je nach Bedarf, etwa abhängig von der Fahrsituation, zwischen den gespeicherten Modellen umzuschalten.

Es ist möglich, daß das in inverser Form in dem IMZF-Regler implementierte Wunschmodell der Gierdynamik bei bestimmten Betriebsbedingungen (beispielsweise Fahrzeuggeschwindigkeit, Kraftschluß zwischen Reifen und Straße, Beladungszustand, usw.) zufriedenstellende Ergebnisse liefert, bei anderen Betriebsbedingungen jedoch nicht mehr zufriedenstellend arbeitet, solange nicht zugleich auch ein oder mehrere IMZF-Reglerparameter an Betriebsparameter angepaßt werden.

Bei einer bevorzugten Weiterbildung der Erfindung ist daher zur Verbesserung der Robustheit der Regelung vorgesehen, daß die in dem IMZF-Regler implementierte Inverse der gewünschten Lenkübertragungsfunktion mit der Fahrzeuggeschwindigkeit angepaßt wird.

Bei niedrigen Fahrzeuggeschwindigkeiten kann in der Regel davon ausgegangen werden, daß der Fahrer in der Lage ist, eine Abweichung vom Wunschgierverhalten selbst auszugleichen, ohne wesentlicher zusätzlicher Lenkeingriffe durch die Regeleinrichtung zu bedürfen. Bevorzugt ist deshalb die Ansprechempfindlichkeit des IMZF-Reglers auf unerwünschte Gierbewegungen des Fahrzeugs innerhalb eines an Fahrzeugstillstand anschließenden Langsamfahrbereichs der Fahrzeuggeschwindigkeit geringer und bei höheren Fahrzeuggeschwindigkeiten größer. Insbesondere kann die Ansprechempfindlichkeit des IMZF-Reglers auf Abweichungen des Fahrzeugs vom Wunschgierverhalten innerhalb des Langsamfahrbereichs dabei zumindest annähernd null sein. Im Anschluß daran sollte sie vorteilhafterweise nur allmählich ansteigen, um Irritationen des Fahrers durch ein abruptes Wirksamwerden der Regeleinrichtung zu vermeiden.

Gemäß einer bevorzugten Weiterbildung der Erfindung kann der IMZF-Regler zur Erzielung einer Tiefpaßcharakter aufweisenden Ansprechempfindlichkeit gegenüber unerwünschten Fahrzeuggierbewegungen mit einer Tiefpaßfilteranordnung ausgeführt sein. Die Tiefpaßfilteranordnung unterdrückt beispielsweise hochfrequentes Meßrauschen der Sensoren.

Statt der Tiefpaßfilteranordnung kann auch eine Bandpaßfilteranordnung verwendet werden, die so ausgelegt ist, daß niederfrequente, also langsame Regelaufgaben dem Fahrer überlassen bleiben und die Regeleinrichtung erst bei Abweichungen vom Wunschgierverhalten im mittleren Frequenzbereich aktiv wird. Insbesondere kann durch geeignete Auslegung der Bandpaßfilteranordnung erreicht werden, daß die Regeleinrichtung im wesentlichen nur im Anfangsstadium einer plötzlichen Abweichung vom Wunschgierverhalten aktiv wird, nämlich in einem Zeitbereich, der innerhalb der sogenannten Schrecksekunde des Fahrers liegt. Nach einer gewissen Zeit, beispielsweise nach etwa 0,5 Sekunden, wenn der Fahrer seinen Schreck über die plötzliche Veränderung der Fahrsituation überwunden hat, wird die Regeleinrichtung allmählich wieder inaktiv und die Kontrolle über das Gierverhalten des Fahrzeugs wird wieder vollständig auf den Fahrer übertragen.

Die im IMZF-Regler in Form des inversen Sollmodells implementiere Wunschlenkübertragungsfunktion ist vorzugsweise auf Grundlage der Gierdynamik eines linearisierten Einspurmodells des Fahrzeugs gebildet.

Weiter sieht die Erfindung gemäß Anspruch 10 ein Verfahren zur Regelung des dynamischen Verhaltens eines Fahrzeugs um eine definierte Achse vor. Das Fahrzeug weist dabei ein Betätigungsorgan zum Ansteuern eines verstellbaren Steuerelements (beispielsweise durch einen Benutzer) auf, wobei das Betätigungsorgan mit dem Steuerelement über einen Steuerübertragungsstrang verbunden ist und das Steuerelement das dynamische Verhalten des Fahrzeugs um die definierte Achse beeinfluß. Gemäß dem Verfahren werden die folgenden Schritte ausgeführt:

- Erfassen eines für die Stellung des Steuerelements repräsentativen Stellsignals, und
- Erfassen der Drehrate des Fahrzeugs um die definierte Achse,
- Bildung eines theoretischen Stellsignals mittels Filterung der erfassten Drehrate mit der Inversen ($G_n^{-1}$) eines Modells ($G_n$), wobei dieses Modell abhängig von der Fahrzeuggeschwindigkeit ($v$) ist, und ein gewünschtes dynamisches Verhalten der Drehrate des Fahrzeugs um die definierte Achse in Abhängigkeit von der Stellung des Steuerelements beschreibt,
- Berechnen eines Korrektursignals durch Differenzbildung des Stellsignals mit dem theoretischen Stellsignal, das durch Filterung der erfaßten Drehrate berechnet wird, und
- Rückführen des Korrektursignals auf den Steuerübertragungsstrang.

Nach einem weiteren Aspekt sieht die Erfindung als Anwendung des Verfahrens nach Anspruch 11 ein Verfahren zum Lenken eines Straßenfahrzeugs vor, welches ein (beispielsweise von einem Fahrer des Fahrzeugs bedienbares) über einen als Steuerübertragungsstrang dienenden Lenkübertragungsstrang mit mindestens einem gelenkten Rad des Fahrzeugs verbundenes Lenkbetätigungsorgan umfaßt, wobei bei dem Verfahren ein für die Gierrate des Fahrzeugs repräsentatives Gierratensignal und Radlenkwinkelinformationen über den Radlenkwinkel des gelenkten Rads bereitgestellt werden und bei Auftreten unerwünschter Gierbewegungen des Fahrzeugs ein fahrerunabhängiger Lenkeingriff auf den Lenkübertragungsstrang in Abhängigkeit von dem Gierratensignal und den Radlenkwinkelinformationen im Sinne einer Reduzierung dieser Gierbewegungen bewirkt wird.

Erfindungsgemäß ist dabei vorgesehen, daß mittels eines von dem Gierratensignal und den Radlenkwinkelinformationen gespeisten IMZF-Reglers ein für die unerwünschten Gierbewegungen repräsentatives Radlenkwinkelkorrektursignal ermittelt wird, wobei in dem Regler zur Filterung des Gierratensignals die Inverse eines Modells implantiert ist, welches eine gewünschte dynamische Abhängigkeit der Gierrate des Fahrzeugs vom Radlenkwinkel des gelenkten Rads beschreibt und welches abhängig von der Fahrzeuggeschwindigkeit ist, und der Lenkeingriff in Abhängigkeit von diesem Radlenkwinkelkorrektursignal bewirkt wird.

Bevorzugt wird dabei als Regler ein IMZF-Regler verwendet, in dem die Inverse einer Wunschlenkübertragungsfunktion implementiert ist, welche eine gewünschte Gierdynamik des Fahrzeugs in Abhängigkeit von dem mittels des Lenkbetätigungsorgans (beispielsweise durch den Fahrer) kommandierten Radlenkwinkel des gelenkten Rads beschreibt, wobei dieses Sollmodell der Gierdynamik abhängig von der Fahrzeuggeschwindigkeit ist.

Vorteilhafterweise wird gemäß einer vorteilhaften Weiterbildung der Erfindung ein IMZF-Regler verwendet, dessen Ansprechempfindlichkeit auf unerwünschte Gierbewegungen des Fahrzeugs innerhalb eines an den Fahrzeugstillstand anschließenden Langsamfahrbereichs der Fahrzeuggeschwindigkeit geringer ist und bei höheren Fahrzeuggeschwindigkeiten größer ist. Insbesondere wird ein IMZF-Regler verwendet, dessen Ansprechempfindlichkeit auf unerwünschte Gierbewegungen des Fahrzeugs innerhalb des Langsamfahrbereichs zumindest annähernd null ist und im Anschluß daran allmählich ansteigt.

Auch wird gemäß der Erfindung bevorzugt ein IMZF-Regler verwendet, der zur Erzielung einer Tiefpaßcharakter aufweisenden Ansprechempfindlichkeit gegenüber unerwünschten Fahrzeuggierbewegungen mit einer Tiefpaßfilteranordnung ausgeführt ist.

Anstelle der Tiefpaßfilteranordnung kann auch eine Bandpaßfilteranordnung verwendet werden.

Des weiteren vorzugsweise ebenfalls ein auf Grundlage der Gierdynamik eines linearisierten Einspurmodells des Fahrzeugs gebildete Wunschlenkübertragungsfunktion verwendet und als invertiertes Sollmodell im IMZF-Regler implementiert.

Gemäß einem letzten Aspekt der vorliegenden Erfindung ist ein Computersoftwareprodukt vorgesehen, das die Ausführung eines solchen Verfahrens ermöglicht, wenn es auf einer Recheneinrichtung läuft.

Nachfolgend wird die Erfindung anhand der beigefügten Zeichnungen näher erläutert. Es zeigen:

Fig.1    stark schematisiert ein erstes Ausführungsbeispiel der erfindungsgemäßen Lenkeinrichtung,

Fig.2    ebenfalls in starker Schematisierung ein zweites Ausführungsbeispiel der erfindungsgemäßen Lenkeinrichtung,

Fig.3    ein Signalflußbild für das Ausführungsbeispiel gemäß Fig.1,

Fig.4    ein Signalflußbild für das Ausführungsbeispiel gemäß Fig.2,

Fig.5    ein abgewandeltes Signalflußbild für das Ausführungsbeispiel gemäß Fig.2,

Fig.6    eine P-Kennlinie als Beispiel für einen geschwindigkeitsselektiven Ein-/Ausschaltvorgang,

Fig.7    den Frequenzgang eines in der erfindungsgemäßen Lenkeinrichtung verwendeten Bandpaßfilters und

Fig.8    schematisch ein Fahrzeugmodell als Grundlage zur Entwicklung eines IMZF-Reglers für die erfindungsgemäßen Lenkeinrichtung.

Im folgenden wird die Erfindung anhand eines von einem Fahrer gelenkten Straßenfahrzeugs erläutert. Es ist indessen ersichtlich, daß die Erfindung zwanglos bei anderen Fahrzeugen (Schiffe, Tragflügelboote, U-Boote, Hubschrauber, Flugzeuge, Panzer, Sonderfahrzeuge, Gabelstapler, usw.) und bezüglich anderer Drehachsen (Rollen, Nikken, usw.) anwendbar ist. Das Lenkrad steht somit als ein Beispiel für ein Betätigungsorgan, das mittels einem Steuerübertragungsstrang (Lenkübertragungsstrang) mit einem Steuerelement (gelenktes Vorderoder Hinterrad) verbunden ist. Das Gierratensignal ist somit ein Beispiel für ein Drehratensignal (d.h. das Signal der Winkelgeschwindigkeit um die betrachtete Achse) und das Radlenkwinkelsignal ein Beispiel für ein Stellsignal, das für die Position eines Steuerelements repräsentativ ist.

Auch kann die Erfindung im Sinne einer unterlagerten Regelung bei automatisch bahnfolgegeregelten Fahrzeugen (beispielsweise bei Flugzeugen mit Autopilot oder automatisch spurgeführten Straßenfahrzeugen) angewandt werden. Unter dem Begriff Betätigungsorgan ist in diesem Fall ein entsprechender Steuereingang zu verstehen.

Bei einem straßengebundenen Fahrzeug stellen übrigens auch die Bremsen ein Steuerelement dar, wenn einzelne Räder eines Mehrspurfahrzeugs selektiv gebremst werden können. Die Bremskraftverteilung kann somit ein Stellsignal darstellen.

Im übrigen läßt sich die Erfindung auch gut mit einer Fahrdynamikregelung auf Grundlage einer selektiven Bremsung einzelner Räder kombinieren, da diese eine Grenzbereichshilfe darstellt, wohingegen die vorliegende Erfindung im Normalzustand unterhalb des Grenzbereichs der Fahrdynamik, aber dafür kontinuierlich angewendet werden kann.

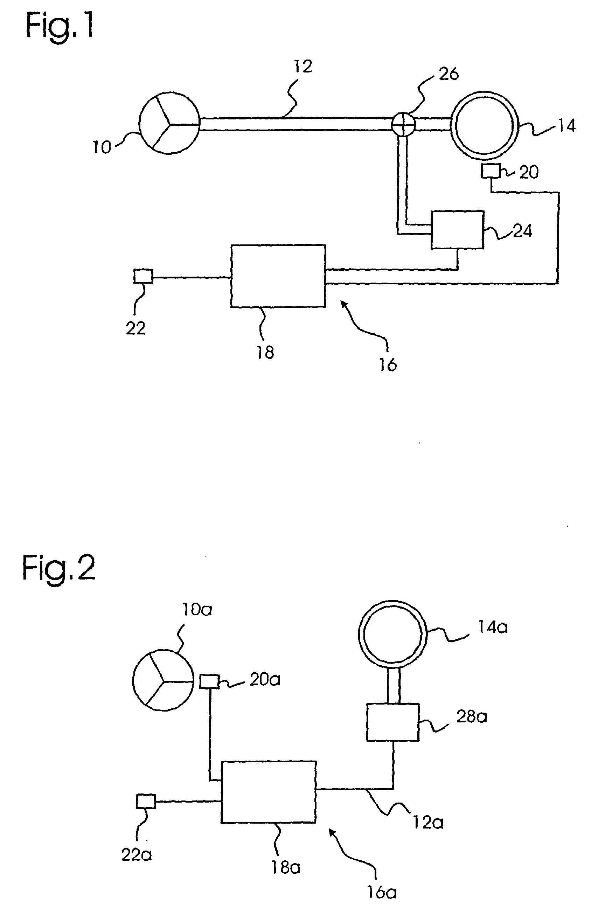

In Fig.1 ist ein vom Fahrer eines straßengebundenen Kraftfahrzeugs bedienbares Lenkrad 10 zu erkennen, dessen Drehbewegungen über einen durchgehenden mechanischen Lenkübertragungsstrang 12 auf ein gelenktes Rad 14 des Fahrzeugs, insbesondere ein Vorderrad, übertragen werden. Das Lenkrad ist nur ein Beispiel für ein Lenkbetätigungsorgan und die vorliegende Erfindung läßt sich zwanglos auch auf andere Lenkbetätigungsorgane übertragen.

Bei plötzlicher Seitenwindeinwirkung auf das Fahrzeug, etwa bei Überfahren einer Brücke oder nach Herausfahren aus dem Windschatten eines Lastkraftwagens oder beim Bremsen auf stellenweise vereister Fahrbahn, kann eine unerwünschte Gierbewegung des Fahrzeugs um die Fahrzeughochachse auftreten, die zum Schleudern des Fahrzeugs und im schlimmsten Fall zu einem Unfall führen kann. Aufgrund der Plötzlichkeit, die solchen Abweichungen vom Wunschgierverhalten (Gierstörungen) häufig zu eigen ist, kann der Fahrer i.a. keine geeigneten Gegenmaßnahmen treffen. Daher ist erfindungsgemäß eine in ihrer Gesamtheit mit 16 bezeichnete Regeleinrichtung vorgesehen, die insbesondere in der Anfangsphase der Störung, wenn der Fahrer noch seine Schrecksekunde durchlebt, additiv zu dem vom Fahrer über das Lenkrad 10 kommandierten Radlenkwinkel einen der Abweichung vom Wunschgierverhalten entgegenwirkenden Korrekturradlenkwinkel auf das gelenkte Rad 14 aufbringt.

Die Regeleinrichtung 16 umfaßt eine vorzugsweise von einem Mikroprozessor gebildete elektronische Regeleinheit 18, welche von einem Radlenkwinkelsensor 20 ein Radlenkwinkelsignal erhält. Der Radlenkwinkelsensor 20 kann beispielsweise im Bereich des gelenkten Rads 14 angebracht sein und unmittelbar dessen Lenkstellung erfassen. Allgemein ermittelt der Radlenkwinkelsensor 20 eine den Radlenkwinkel wiedergebende Größe (z.B. Spurstangenverschiebung, usw.).

Wenn der tatsächliche Korrekturradlenkwinkel bekannt ist, kann alternativ als Radlenkwinkelsignal das Signal eines Sensors verwendet werden, der an einer das Lenkrad 10 tragenden Lenksäule 12 des Fahrzeugs angebracht ist und beispielsweise mittels eines Potentiometers den Lenkeinschlag des Lenkrads 10 erfaßt. Zusätzlich zu dem Radlenkwinkelsignal erhält die Regeleinheit 18 von einem Gierratensensor 22 ein Gierratensignal, das die momentane Gierrate bzw. Giergeschwindigkeit des Fahrzeugs angibt. Anhand des Gierratensignals und des Radlenkwinkelsignals ermittelt die Regeleinheit 18, ob über die vom Fahrer vorgenommenen Lenkvorgänge hinaus ein zusätzlicher Lenkeingriff auf das gelenkte Rad 14 nötig ist, um das Fahrzeug zu stabilisieren.

Bei der Lenkeinrichtung der Fig.1 erfolgt dieser Lenkeingriff über einen gesonderten Lenkaktuator 24, welcher den von der Regeleinheit 18 ermittelten notwendigen Korrekturradlenkwinkel in den Lenkübertragungsstrang 12 einspeist und dem vom Fahrer über das Lenkrad 10 vorgegebenen Radlenkwinkel additiv überlagert. Dies ist schematisch durch eine mechanische Summationsstelle 26 angedeutet und wird gemeinhin als aktive Zusatzlenkung oder Überlagerungslenkung (siehe beispielsweise EP 0 916 568 A2) bezeichnet.

Die Lenkeinrichtung der Fig.2, bei der gleiche oder gleichwirkende Komponenten mit den gleichen Bezugszeichen wie in Fig.1, jedoch zusätzlich mit dem Kleinbuchstaben a versehen sind, ist dagegen als sogenannte "Steer-by-Wire" Lenkung ausgebildet, bei welcher es keinen durchgehenden mechanischen Lenkübertragungsstrang zwischen Lenkrad 10a und gelenktem Rad 14a gibt. Stattdessen enthält der das Lenkrad 10a mit dem gelenkten Rad 14a verbindende Lenkübertragungsstrang 12a wenigstens eine nichtmechanische (beispielsweise elektrische) Teilstrecke. Der vom Fahrer kommandierte Radlenkwinkel wird von der Regeleinheit 18a elektronisch mit dem gegebenenfalls erforderlichen Korrekturradlenkwinkel zu einem Gesamtradlenkwinkel additiv zusammengefaßt. Dieser wird über einen gemeinsamen Lenkaktuator 28a am gelenkten Rad 14a eingestellt.

Zweckmäßigerweise ist der Radlenkwinkelsensor 20a an der Lenksäule angebracht, um unmittelbar die Drehstellung des Lenkrads 10a zu erfassen und der Regeleinheit 18a als kommandierten Radlenkwinkel zuführen zu können. Den tatsächlich eingestellten Radlenkwinkel des gelenkten Rads 14a kann die Regeleinheit 18a dann ohne weiteres aus dem kommandierten Radlenkwinkel und dem momentan eingestellten Korrekturradlenkwinkel ermitteln. Umgekehrt kann die Regeleinheit 18a auch ohne weiteres den kommandierten Radlenkwinkel rechnerisch unter Zuhilfenahme des momentanen Korrekturradlenkwinkels ermitteln, falls der Radlenkwinkelsensor 20a an anderer Stelle angeordnet ist und dabei den tatsächlichen, also geregelten Radlenkwinkel des gelenkten Rads 14a erfaßt.

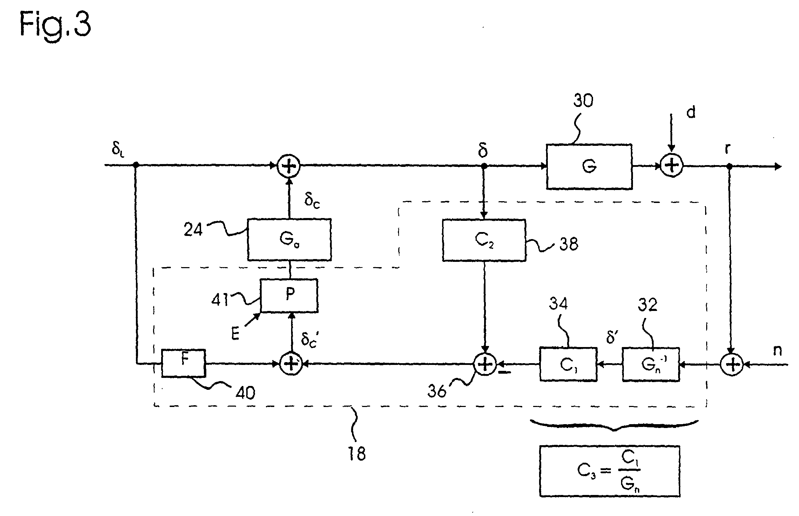

Zur Erläuterung des Regelalgorithmus der Lenkeinrichtung der Fig.1 wird zusätzlich auf den Signalflußplan der Fig.3 verwiesen. In diesem bezeichnen $\delta_L$ den vom Fahrer kommandierten Radlenkwinkel, $\delta_c$ den zu dem kommandierten Radlenkwinkel $\delta_L$ addierten Korrekturradlenkwinkel, $\delta$ den sich aus der Überlagerung von $\delta_C$ und $\delta_L$ ergebenden, am gelenkten Rad 14 eingestellten Gesamtradlenkwinkel, r die erfaßte Gierrate des Fahrzeugs, *d* eine von außen auf das Fahrzeug wirkende Gierstörung und $n$ das Meßrauschen des Gierratensensors 22.

Geregelt wird das tatsächliche Fahrzeug mit dem tatsächlichen Aktuator, der im folgenden mit dem Symbol eines Modells bezeichnet wird. Ein Block 30 bezeichnet das - ungeregelte - Lenkübertragungsverhalten des Fahrzeugs, welches sich durch eine Lenkübertragungsfunktion $G$ modellieren läßt. Diese gibt das Gierverhalten des Fahrzeugs in Abhängigkeit vom Radlenkwinkel $\delta$ des gelenkten Rads 14 an. Das Übertragungsverhalten des Lenkaktuators 24 läßt sich durch eine Aktuatorübertragungsfunktion $G_a$ modellieren.

Die Regeleinheit 18 arbeitet als sogenannter IMZF-Regler. Dieser umfaßt ein durch Block 32 angedeutetes inverses Modell einer gewünschten Lenkübertragungsfunktion $G_n$. Dieses inverse Modell 32 besitzt dementsprechend die Übertragungsfunktion $G_n^{-1}$. Es wird mit dem gegebenenfalls mit Meßrauschen behafteten Signal der erfaßten, gegebenenfalls störbehafteten Gierrate $r$ gespeist und liefert an seinem Ausgang ein Signal $\delta'$, das einen theoretischen Radlenkwinkel des gelenkten Rads 14 repräsentiert, der bei einem Fahrzeug mit der Lenkübertragungsfunktion $G_n$ zu der tatsächlich gemessenen Gierrate $r$ führen würde. Dieses Signal $\delta'$ wird nach Durchlaufen eines Filters 34 mit der Filterübertragungsfunktion $C_1$ an einer Vergleichsstelle 36 mit dem gleichfalls zuvor gefilterten Radlenkwinkel $\delta$ des gelenkten Rads 14 verglichen. Zur Filterung des Signals $\delta$ ist ein weiteres Filter 38 mit der Filterübertragungsfunktion $C_2$ vorgesehen. Die Filter $C_1$ und $C_2$ können prinzipiell unterschiedlich ausgelegt werden. In einer bevorzugten Variante sind $C_1$ und $C_2$ identisch.

Wie in Fig.3 schematisch dargestellt, stellt allgemein ausgedrückt die Kombination des Blocks 32 und des Blocks 34 ein Filter dar, das in dem gezeigten Beispiel die Übertragungsfunktion $C_3 = C_1/G_n$ aufweist.

Das Filter $C_1$ mit entsprechendem Differenzgrad ist für die Implementierung von $1/G_n$ notwendig.

Der IMZF-Regler ermittelt aus dem Gierratensignal und den Radlenkwinkelinformationen bzw. dem Radlenkwinkelsignal ein Radlenkwinkelkorrektursignal, anhand dessen der Lenkeingriff durchgeführt wird. Der IMZF-Regler ermittelt genauer gesagt aus dem Gierratensignal eine Abschätzung des theoretischen Radlenkwinkels, der unter störungsfreien Verhältnissen bei einem Fahrzeug, dessen Lenkübertragungsfunktion mit der Wunschlenkübertragungsfunktion identisch ist, zu dem gleichen Gierverhalten führen würde, welches aktuell beim tatsächlichen Fahrzeug gemessen wird. Dieser theoretische Radlenkwinkel wird mit dem durch das Radlenkwinkelsignal angegebenen tatsächlichen Radlenkwinkel verglichen. Der Vergleich liefert das Radlenkwinkelkorrektursignal. Dieses ist ein Maß für die Stärke der Abweichung vom Wunschgierverhalten und repräsentiert einen Korrekturradlenkwinkel, um den die momentane Lenkstellung des gelenkten Rads zur Behebung der Abweichung vom Wunschgierverhalten zu korrigieren ist. Zur Ermittlung des theoretischen Radlenkwinkels ist dazu in dem IMZF-Regler die Inverse eines Modells implementiert, das eine gewünschte Gierdynamik des Fahrzeugs in Abhängigkeit des vom Fahrer kommandierten Radlenkwinkels des gelenkten Rads beschreibt.

Der so gebildete IMZF-Regler ist nicht nur in der Lage, äußere Gierstörungen d herauszuregeln. Er regelt jedwede Radlenkwinkeldifferenz $\delta_C'$ heraus, die auf Abweichungen des tatsächlichen Gierverhaltens vom Wunschgierverhalten (u.a. Modellierungsfehlern) beruhen. Diese Eigenschaft kann genutzt werden, um gezielt eine Wunschlenkübertragungsfunktion $G_n$ festzulegen, die zu näherungsweise einer bestimmten gewünschten Gierdynamik des Fahrzeugs führt; der IMZF-Regler bewirkt, daß das Gierverhalten des geregelten Fahrzeugs dem Modell $G_n$ folgt. Die Wunschlenkübertragungsfunktion $G_n$ kann gegebenenfalls an die Betriebsbedingungen, insbesondere die Fahrzeuggeschwindigkeit, angepaßt werden, soweit Werte hierfür aus Messungen, Beobachtungen oder Schätzalgorithmen zur Verfügung stehen.

Gegebenenfalls kann die gewünschte Lenkübertragungsfunktion darüber hinaus vom Hersteller und/oder vom Benutzer einstellbar sein, um beispielsweise für Stadt- oder Autobahnverkehr, Sport- oder Komforteinstellung, unterschiedliche Lenkeigenschaften zu erzielen. Dazu können Parameter der Wunschlenkübertragungsfunktion $G_n$ veränderbar sein.

Mit dem Bezugszeichen 40 ist ein optionales Filter mit der Übertragungsfunktion $F$ im Vorwärtszweig der Regelungsstruktur bezeichnet. Dieses Filter 40 kann als weiterer Freiheitsgrad bei der Auslegung des Lenkübertragungsverhaltens (gemeinhin auch als Handling bezeichnet) genutzt werden, beispielsweise um die Lenkübersetzung veränderbar zu machen oder das Ansprechverhalten (beispielsweise die Agilität des Lenkübertragungsverhaltens) zu verbessern. Hierdurch kann gegebenenfalls, ausgehend von $G_n$, die Lenkübertragungsfunktion des geregelten Fahrzeugs weiter verändert werden. Soll von dieser Möglichkeit kein Gebrauch gemacht werden, so wird $F = 0$ gesetzt.

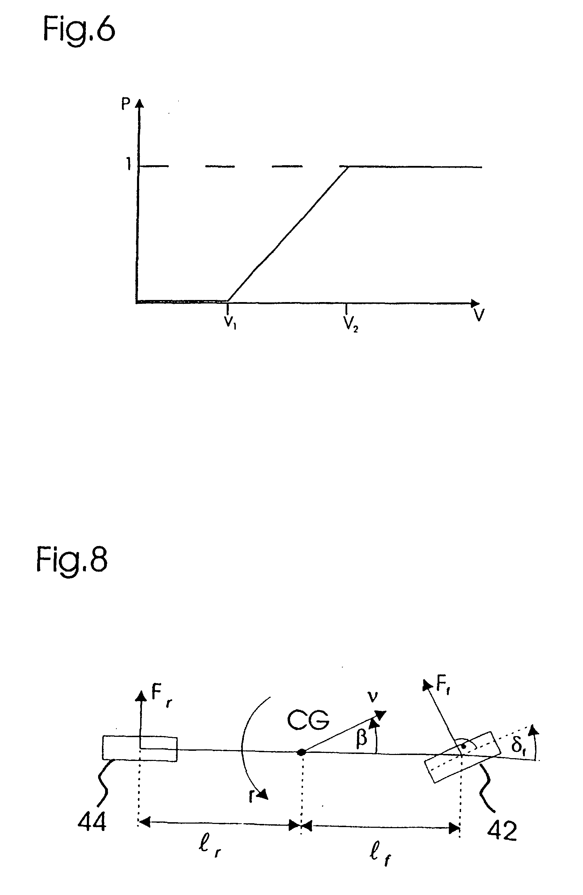

Mit dem Bezugszeichen 41 ist eine Einheit zum Ein- und Ausschalten des Reglers bezeichnet. Beispielsweise kann das Ein-/Ausschaltverhalten gemäß der Kennlinie von Figur 6 erfolgen. In diesem Fall ist der Regler bis zu einem unteren Geschwindigkeitsschwellenwert $v_1$ ausgeschaltet. Dies kann notwendig sein, da beispielsweise ABS-Sensoren erst ab einer gewissen Mindestgeschwindigkeit funktionsfähig sind. Ab dem unteren Geschwindigkeitsschwellenwert $v_1$ kann dann der Regler kontinuierlich bis zu einem oberen Geschwindigkeitsschwellenwert $v_2$ eingeschaltet werden.

Der Grund für ein solches Ein-/Ausschaltverhalten ist, daß der Fahrer bei niedrigen Fahrzeuggeschwindigkeiten in der Regel keine Probleme haben wird, das Fahrzeug auch bei Seitenwind und dergl. unter Kontrolle zu halten. Das geschwindigkeitsabhängig stetige Ansteigen der Ansprechempfindlichkeit der Regeleinrichtung gemäß der $P$-

Kennlinie vom abgeschalteten, inaktiven Zustand in den voll eingeschalteten Zustand vermeidet ruckartige und damit für den Fahrer irritierende Lenkeingriffe.

Wie in den Figuren schematisch mit $E$ bezeichnet, kann die Regelung auch allgemein abgeschaltet sein und nur ereignisgesteuert aktivierbar sein. Falls also ein Ereignis wie beispielsweise das Platzen eines Reifens durch plötzlichen Druckabfall detektiert wird, gibt ein entsprechender Sensor das Signal $E$ aus, um die Regelung einzuschalten.

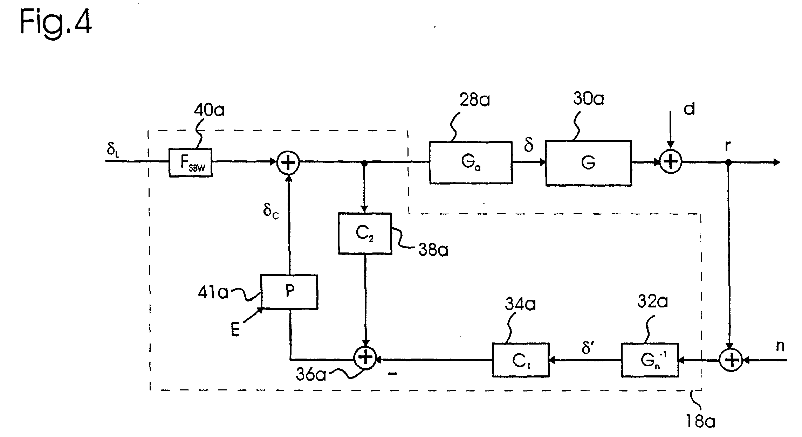

Fig.4 zeigt einen entsprechenden Signalflußplan für die Lenkeinrichtung der Fig.2. Bei dieser Lenkeinrichtung stellt der Aktuator den Gesamtradlenkwinkel und nicht nur einen Korrekturradlenkwinkel ein. Dies wird oft auch als "Steer-by-Wire" bezeichnet, da wenigstens eine nichtmechanische Teilstrecke vorliegt.

Gleiche oder gleichwirkende Komponenten sind in Fig.4 mit den gleichen Bezugzeichen wie in Fig.3 versehen, jedoch wiederum um den Kleinbuchstaben a ergänzt. Im übrigen sind die Bezugzeichen der Fig.2 verwendet. Der Unterschied zu dem Signalflußplan der Fig.3 liegt in der Position des Lenkaktuators 28a, in den hier die Summe aus kommandiertem Radlenkwinkel $\delta_L$ und Korrekturlenkwinkel $\delta_C$ eingegeben wird.

Mit dem Bezugzeichen 40a ist ein optionales Vorfilter mit der Übertragungsfunktion $F_{SBW}$ bezeichnet. Soll von dieser Möglichkeit zur Gestaltung des Lenkübertragungsverhaltens kein Gebrauch gemacht werden, so wird $F_{SBW}$ = 1 gesetzt.

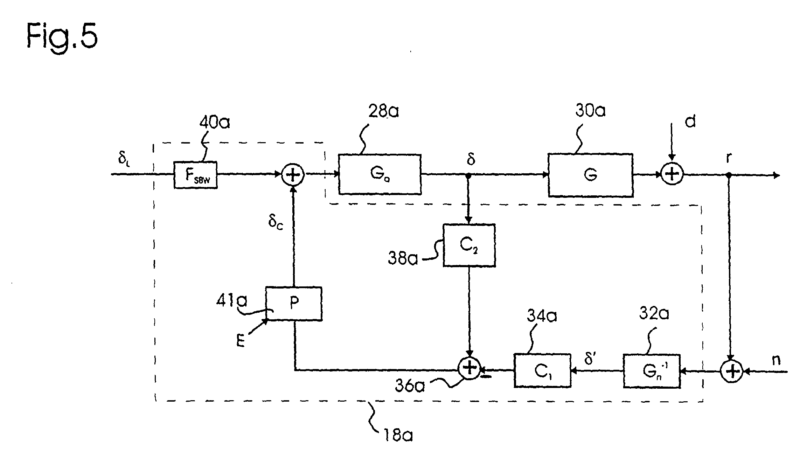

Fig.5 zeigt eine Variante von Fig.4, bei der als Eingangssignal zum Filter 38a nicht, wie in Fig.4, das Eingangssignal des Aktuators 28a, sondern dessen Ausgangssignal verwendet wird. Hierdurch kann eine Verbesserung der Robustheit der Regelung gegenüber nichtlinearem Verhalten des Aktuators 28a erreicht werden, insbesondere gegenüber Sättigungseffekten (Stellratenbegrenzung usw.) des Aktuators 28a.

Der IMZF-Regler ist vorzugsweise so ausgelegt, daß er robuste Stabilität, Störungsunterdrückung und Erfüllung des gewünschten Lenkübertragungsverhaltens auch bei großen Schwankungen der Fahrzeuggeschwindigkeit, der Beladung und des Kraftschlusses zwischen Reifen und Straße aufweist.

In Verbindung mit Fig.3 bis 5 wird darauf hingewiesen, daß es prinzipiell auch denkbar ist, zusätzlich oder statt der Filter 34, 38 bzw. 34a, 38a nach der Vergleichsstelle 36 bzw. 36a ein Bandpaßfilter vorzusehen. Ebenso kann statt der Bandpaßcharakteristik auch eine Filteranordnung mit Tiefpaßcharakteristik gewählt werden.

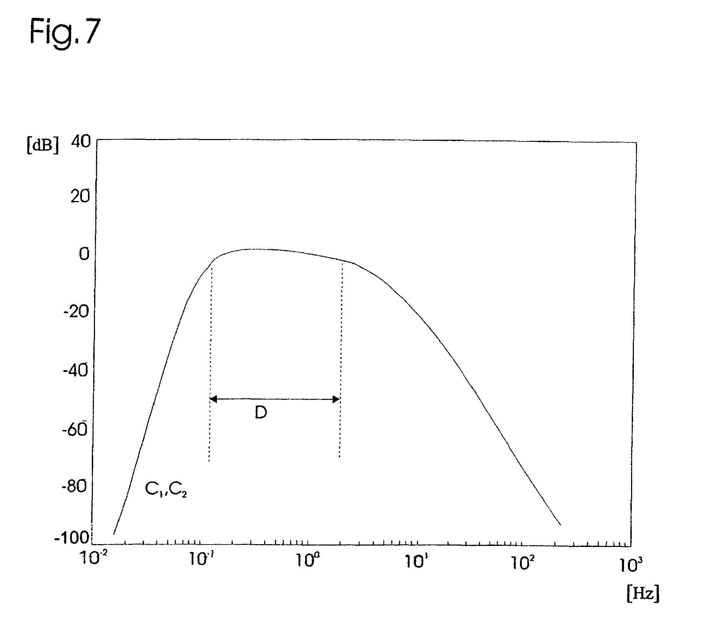

Fig.7 zeigt einen beispielhaften Amplitudengang für die Filterübertragungsfunktionen $C_1$ und $C_2$ der Filter 34, 34a bzw. 38, 38a. Wie zu erkennen ist, besitzen die Filter in diesem Beispiel Bandpaßcharakter. Der Bandpaßcharakter ermöglicht es, daß die Regeleinrichtung nur auf die Anteile einer Abweichung vom Wunschgierverhalten im mittleren Frequenzbereich reagiert und ihre Regelwirkung nach einigen Zehntelsekunden abklingt. Dabei wird davon ausgegangen, daß der Fahrer auf die niederfrequenten Anteile der Abweichung vom Wunschgierverhalten normalerweise selbst in angemessener Weise reagieren kann. Das Bandpaßcharakteristik sorgt somit für eine frequenzselektive Mensch/Maschine-Aufgabentrennung.

Im Durchlaßbereich, der in Fig.7 mit $D$ angedeutet ist, besitzen die Filterübertragungsfunktionen $C_1$ und $C_2$ vorzugsweise annähernd den Wert 1 (entsprechend 0 dB). Im Anschluß an den Durchlaßbereich $D$ fällt der Filteramplitudengang wieder ab, um das in den Fig.3 bis 5 mit n bezeichnete Sensorrauschen zu unterdrücken und in bekannter Weise die robuste Stabilität des geregelten Systems zu gewährleisten.

Zur Ermittlung einer geeigneten Wunschlenkübertragungsfunktion $G_n$ für ein beispielhaft angenommen vorderradgelenktes Straßenfahrzeug kann beispielsweise ein in Fig.8 skizziertes linearisiertes Einspurmodell des Fahrzeugs mit einem gelenkten Vorderrad 42 und einem Hinterrad 44 herangezogen werden. In diesem Modell bezeichnen $F_f$ und $F_r$ die Seitenkraft am Vorderrad 42 bzw. Hinterrad 44, $CG$ den Schwerpunkt des Fahrzeugs, $r$ die Gierrate des Fahrzeugs, $v$ den Betrag des Fahrzeuggeschwindigkeitsvektors im Schwerpunkt $CG$, $l_f$ und $l_r$ den Abstand der Vorder- bzw. Hinterachse vom Schwerpunkt $CG$, $\delta_f$ den Vorderradlenkwinkel und $\beta$ den Schwimmwinkel zwischen Geschwindigkeitsvektor $v$ und Fahrzeuglängsachse im Schwerpunkt CG.

Für dieses Modell läßt sich eine Lenkübertragungsfunktion $G^*(s)$ vom Vorderradlenkwinkel $\delta_f$ zur Gierrate $r$ wie folgt angeben:

$$G^*(s) = \frac{r(s)}{\delta_f(s)} = \frac{b_0 + b_1 s}{a_0 + a_1 s + a_2 s^2} \qquad (1)$$

mit

$$b_0 = c_f c_r (l_f + l_r) v$$
$$b_1 = c_f l_f m v^2 \qquad\qquad (2)$$
$$a_0 = c_f c_r (l_f + l_r)^2 + (c_r l_r - c_f l_f) m v^2$$
$$a_1 = (c_f (J + l_f^2 m) + c_r (J + l_r^2 m)) v$$
$$a_2 = J m v^2$$

und $c_f = \mu c_{f0}$, $c_r = \mu c_{r0}$. Darin bezeichnen $c_{f0}$ und $c_{r0}$ die nominelle Schräglaufsteifigkeit vorn bzw. hinten, $\mu$ den Kraftschlußkoeffizienten zwischen Reifen und Straße, $m$ die Fahrzeugmasse und $J$ das Trägheitsmoment des Fahrzeugs um die Hochachse durch den Schwerpunkt $CG$.

Die stationäre Verstärkung $K^*(v)$ der Lenkübertragungsfunktion $G^*(s)$ bei einem nominalen Kraftschlußkoeffizienten $\mu = \mu_n$ läßt sich dann wie folgt angeben:

$$K^\cdot(v) = \lim_{s \to 0} G^\cdot(s) \Big|_{\mu = \mu_n} \qquad\qquad (3)$$

Basierend auf vorstehendem Fahrzeugmodell haben sich für den IMZF-Regler Wunschlenkübertragungsfunktionen $G_n$ der Form

$$G_n(s) = G^*(s)|_{\mu=\mu_n} \qquad\qquad (4)$$

oder

$$G_n(s) = \frac{K_n}{\tau_n s + 1} \qquad\qquad (5)$$

als günstig erwiesen. $\tau_n$ und $K_n$ sind dabei IMZF-Reglerparameter, die abhängig von verschiedenen Betriebszuständen bzw. -parametern (beispielsweise $\mu$, v, m,...) gewählt werden können. Man erkennt leicht, daß damit die Wunschlenkübertragungsfunktion $G_n$ eine Abhängigkeit von der Fahrzeuggeschwindigkeit besitzt.

Es ist anzumerken, daß sich die Erfindung sowohl zeitkontinuierlich (wie erläutert) wie auch zeitdiskret implementieren läßt.

Die Vorteile der Erfindung lassen sich wie folgt zusammenfassen:

1. gute Störunterdrückung ($\mu$-split-Bremsung, Reifendruckverlust, Seitenwind, Strömung, Triebwerksausfall)
2. Möglichkeit der Vorgabe eines Wunschlenkübertragungsverhaltens durch Wahl eines entsprechenden Sollmodells $G_n$.
3. Robustheit der beiden vorgenannten Eigenschaften bezüglich parametrischer Unsicherheiten und nichtmodellierter Dynamik.

Dies läßt sich wie folgt demonstrieren:

Bei Wahl von $C_1 = C_2 = Q$ und $F_{SBW} = 1$ kann das Lenkübertragungsverhalten des geregelten Fahrzeugs wie folgt dargestellt werden (vgl. Fig.5 ):

$$\frac{r}{\delta_L} = \frac{G_n G_a G}{G_n (1 - G_a Q) + G_a G Q} \qquad\qquad (6)$$

In einem gewünschten Frequenzbereich, in dem auch der Aktuator mit der Übertragungsfunktion $G_a$ hinreichend ideales Übertragungsverhalten aufweist, kann $Q = 1$ gewählt werden. Unter den Annahmen $Q = 1$ und $G_a = 1$ geht Gl. (6) über in

$$\frac{r}{\delta_L} = G_n \qquad (7)$$

Da dies unabhängig von Betriebsparametern und der Anwesenheit äußerer Störungen der Fall ist, zeigen diese Grenzwertbetrachtungen die Robustheit der genannten Eigenschaften der erfindungsgemäßen Regelungsstruktur im betrachteten Frequenzbereich.

**Patentansprüche**

1.   Geregelte Einrichtung zur Steuerung des dynamischen Verhaltens eines Fahrzeugs um eine definierte Achse, aufweisend:

-   ein Betätigungsorgan zum Ansteuern eines verstellbaren Steuerelements, wobei das Betätigungsorgan mit dem Steuerelement über einen Steuerübertragungsstrang verbunden ist und das Steuerelement das Verhalten des Fahrzeugs um die definierte Achse beeinflußt,
-   einen Sensor zur Erfassung eines für die Stellung des Steuerelements repräsentativen Stellsignals, und
-   einen Sensor zur Erfassung der Drehrate des Fahrzeugs um die definierte Achse,

einen Regler (18; 18a), in welchem die Bildung eines theoretischen Stellsignals mittels Filterung der erfassten Drehrate mit der Inversen ($G_n^{-1}$) eines Modells ($G_n$) implementiert ist,
wobei dieses Modell abhängig von der Fahrzeuggeschwindigkeit (v) ist, und ein gewünschtes dynamisches Verhalten der Drehrate des Fahrzeugs um die definierte Achse in Abhängigkeit von der Stellung des Steuerelements beschreibt und in welchem Regler durch Differenzbildung des Stellsignals mit dem theoretischen Stellsignal die Erzeugung eines Korrektursignals und die Rückführung dieses Korrektursignals auf den Steuerübertragungsstrang implementiert ist.

2.   Einrichtung nach Anspruch 1, **dadurch gekennzeichnet, dass** die Ansprechempfindlichkeit des Reglers (18; 18a) auf unerwünschte Bewegungen des Fahrzeugs um die definierte Achse innerhalb eines an Fahrzeugstillstand anschließenden Bereichs niedriger Fahrzeuggeschwindigkeit *(v)* geringer ist als bei höheren Fahrzeuggeschwindigkeiten *(v)*.

3.   Einrichtung nach Anspruch 2, **dadurch gekennzeichnet, dass** die Ansprechempfindlichkeit des Reglers (18; 18a) auf unerwünschte Bewegungen des Fahrzeugs um die definierte Achse innerhalb des Bereichs niedriger Fahrzeuggeschwindigkeit zumindest annähernd null ist und im Anschluß daran allmählich ansteigt.

4.   Einrichtung nach einem der vorhergehenden Ansprüche, **dadurch gekennzeichnet, dass** der Regler (18; 18a) zur Erzielung einer Bandpaßcharakter aufweisenden Ansprechempfindlichkeit gegenüber unerwünschten Bewegungen um die definierte Achse mit einer Bandpaßfilteranordnung (34, 38; 34a, 38a) ausgeführt ist.

5.   Einrichtung nach Anspruch 1 als Lenkeinrichtung für ein Straßenfahrzeug, umfassend

-   ein über einen als Steuerübertragungsstrang dienenden Lenkübertragungsstrang (12; 12a) mit mindestens einem gelenkten Rad (14; 14a) des Fahrzeugs verbundenes Lenkbetätigungsorgan (10; 10a),
-   eine Gierratenerfassungseinrichtung (22; 22a), welche ein für die Gierrate (r) des Fahrzeugs repräsentatives Gierratensignal bereitstellt,
-   eine Radlenkwinkelerfassungseinrichtung (20; 20a), welche Radlenkwinkelinformationen über den Radlenkwinkel (δ) des gelenkten Rads (14; 14a) bereitstellt, und
-   eine auf das Gierratensignal und die Radlenkwinkelinformationen ansprechende und auf den Lenkübertragungsstrang (12; 12a) einwirkende Regeleinrichtung (16; 16a), welche dazu eingerichtet ist, bei Auftreten unerwünschter Gierbewegungen des Fahrzeugs einen unabhängigen Lenkeingriff im Sinne einer Reduzierung dieser Gierbewegungen zu bewirken, **dadurch gekennzeichnet, daß**

die Regeleinrichtung (16; 16a) einen von dem Gierratensignal (r) und den Radlenkwinkelinformationen gespeisten Regler (18; 18a) umfaßt, welcher ein für die unerwünschten Gierbewegungen repräsentatives Radlenkwinkelkorrektursignal $(\delta_c)$ bereitstellt,

in dem Regler (18; 18a) zur Filterung des Gierratensignals die Inverse $(G_n^{-1})$ eines Modells $(G_n)$ der Gierdynamik implementiert ist, welches abhängig von der Fahrzeuggeschwindigkeit $(v)$ ist und welches eine gewünschte dynamische Abhängigkeit der Gierrate des Fahrzeugs vom Radlenkwinkel $(\delta)$ des gelenkten Rads (14; 14a) beschreibt, und

die Regeleinrichtung (16; 16a) dazu eingerichtet ist, den Lenkeingriff in Abhängigkeit von dem Radlenkwinkelkorrektursignal $(\delta_c)$ zu bewirken.

6. Lenkeinrichtung nach Anspruch 5, **dadurch gekennzeichnet, daß** die Ansprechempfindlichkeit des Reglers (18; 18a) auf unerwünschte Gierbewegungen des Fahrzeugs innerhalb eines an Fahrzeugstillstand anschließenden Langsamfahrbereichs der Fahrzeuggeschwindigkeit $(v)$ geringer ist als bei höheren Fahrzeuggeschwindigkeiten $(v)$.

7. Lenkeinrichtung nach Anspruch 6, **dadurch gekennzeichnet, daß** die Ansprechempfindlichkeit des Reglers (18; 18a) auf unerwünschte Gierbewegungen des Fahrzeugs innerhalb des Langsamfahrbereichs zumindest annähernd null ist und im Anschluß daran allmählich ansteigt.

8. Lenkeinrichtung nach einem der Ansprüche 5 bis 7, **dadurch gekennzeichnet, daß** der Regler (18; 18a) zur Erzielung einer Bandpaßcharakter aufweisenden Ansprechempfindlichkeit gegenüber unerwünschten Fahrzeuggierbewegungen mit einer Bandpaßfilteranordnung (34, 38; 34a, 38a) ausgeführt ist.

9. Lenkeinrichtung nach einem der Ansprüche 5 bis 8, **dadurch gekennzeichnet, daß** der Regler (18; 18a) auf Grundlage der Gierdynamik eines linearisierten Einspurmodells des Fahrzeugs (Fig.8) gebildet ist.

10. Verfahren zur Regelung des dynamischen Verhaltens eines Fahrzeugs um eine definierte Achse,
    wobei das Fahrzeug ein Betätigungsorgan zum Ansteuern eines verstellbaren Steuerelements aufweist, das Betätigungsorgan mit dem Steuerelement über einen Steuerübertragungsstrang verbunden ist und das Steuerelement das Verhalten des Fahrzeugs um die definierte Achse beeinflußt,
    wobei die folgenden Schritte durchgeführt werden:

    - Erfassen eines für die Stellung des Steuerelements repräsentativen Stellsignals, und
    - Erfassen der Drehrate des Fahrzeugs um die definierte Achse,

    Bildung eines theoretischen Stellsignals mittels Filterung der erfassten Drehrate mit der Inversen $(G_n^{-1})$ eines Modells $(G_n)$, wobei dieses Modell abhängig von der Fahrzeuggeschwindigkeit $(v)$ ist, und ein gewünschtes dynamisches Verhalten der Drehrate des Fahrzeugs um die definierte Achse in Abhängigkeit von der Stellung des Steuerelements beschreibt,

    - Berechnen eines Korrektursignals durch Differenzbildung des Stellsignals mit dem theoretischen Stellsignal, das durch Filterung der erfaßten Drehrate berechnet wird, und
    - Rückführen des Korrektursignals auf den Steuerübertragungsstrang.

11. Verfahren nach Anspruch 10, **dadurch gekennzeichnet, daß** ein Regler (18; 18a) verwendet wird, dessen Ansprechempfindlichkeit auf unerwünschte Bewegungen des Fahrzeugs um die definierte Achse innerhalb eines an Fahrzeugstillstand anschließenden Bereichs niedriger Fahrzeuggeschwindigkeit $(v)$ geringer ist und bei höheren Fahrzeuggeschwindigkeiten $(v)$ größer ist.

12. Verfahren nach Anspruch 11, **dadurch gekennzeichnet, daß** ein Regler (18; 18a) verwendet wird, dessen Ansprechempfindlichkeit auf unerwünschte Bewegungen des Fahrzeugs um die definierte Achse innerhalb des Langsamfahrbereichs zumindest annähernd null ist und im Anschluß daran allmählich ansteigt.

13. Verfahren nach einem der Ansprüche 10 bis 12, **dadurch gekennzeichnet, daß** ein Regler (18; 18a) verwendet wird, der zur Erzielung einer Bandpaßcharakter aufweisenden Ansprechempfindlichkeit gegenüber unerwünschten Bewegungen des Fahrzeugs um die definierte Achse mit einer Bandpaßfilteranordnung (34, 38; 34a, 38a) ausgeführt ist.

14. Verfahren nach Anspruch 10 zum Lenken eines Straßenfahrzeugs,

welches ein über einen als Steuerübertragungsstrang dienenden Lenkübertragungsstrang (12; 12a) mit mindestens einem gelenkten Rad (14; 14a) des Fahrzeugs verbundenes Lenkbetätigungsorgan (10; 10a) umfaßt, wobei bei dem Verfahren ein für die Gierrate ($r$) des Fahrzeugs repräsentatives Gierratensignal und Radlenkwinkelinformationen über den Radlenkwinkel ($\delta$) des gelenkten Rads (14; 14a) bereitgestellt werden und bei Auftreten unerwünschter Gierbewegungen des Fahrzeugs ein unabhängiger Lenkeingriff auf den Lenkübertragungsstrang (12; 12a) in Abhängigkeit von dem Gierratensignal und den Radlenkwinkelinformationen im Sinne einer Reduzierung dieser unerwünschten Gierbewegungen bewirkt wird, **dadurch gekennzeichnet, daß** mittels eines von dem Gierratensignal und den Radlenkwinkelinformationen gespeisten Reglers (18; 18a) ein für die unerwünschten Gierbewegungen repräsentatives Radlenkwinkelkorrektursignal ($\delta_c$) ermittelt wird, wobei

in dem Regler (18; 18a) zur Filterung des Gierratensignals die Inverse ($G_n^{-1}$) eines Modells ($G_n$) implementiert ist, welches eine gewünschte dynamische Abhängigkeit der Gierrate des Fahrzeugs vom Radlenkwinkel ($\delta$) des gelenkten Rads (14; 14a) beschreibt und welches abhängig von der Fahrzeuggeschwindigkeit ($v$) ist, und der Lenkeingriff in Abhängigkeit von diesem Radlenkwinkelkorrektursignal ($\delta_c$) bewirkt wird.

**15.** Verfahren nach Anspruch 14, **dadurch gekennzeichnet, daß** ein Regler (18; 18a) verwendet wird, dessen Ansprechempfindlichkeit auf unerwünschte Gierbewegungen des Fahrzeugs innerhalb eines an Fahrzeugstillstand anschließenden Langsamfahrbereichs der Fahrzeuggeschwindigkeit ($v$) geringer ist und bei höheren Fahrzeuggeschwindigkeiten ($v$) größer ist.

**16.** Verfahren nach Anspruch 15, **dadurch gekennzeichnet, daß** ein Regler (18; 18a) verwendet wird, dessen Ansprechempfindlichkeit auf unerwünschte Gierbewegungen des Fahrzeugs innerhalb des Langsamfahrbereichs zumindest annähernd null ist und im Anschluß daran allmählich ansteigt.

**17.** Verfahren nach einem der Ansprüche 14 bis 16, **dadurch gekennzeichnet, daß** ein Regler (18; 18a) verwendet wird, der zur Erzielung einer Bandpaßcharakter aufweisenden Ansprechempfindlichkeit gegenüber unerwünschten Fahrzeuggierbewegungen mit einer Bandpaßfilteranordnung (34, 38; 34a,38a) ausgeführt ist.

**18.** Verfahren nach einem der Ansprüche 14 bis 17, **dadurch gekennzeichnet, daß** ein auf Grundlage der Gierdynamik eines linearisierten Einspurmodells des Fahrzeugs (Fig.8) gebildeter Regler (18; 18a) verwendet wird.

**19.** Computersoftwareprodukt, **dadurch gekennzeichnet, daß** es im in einem Rechner implementierten Zustand die Ausführung eines Verfahrens nach einem der Ansprüche 14 bis 19 ermöglicht.

**Claims**

**1.** A closed-loop controlled apparatus for controlling the dynamic response of a vehicle about a defined axis, comprising

- an actuator for activating a variable control element, the actuator being connected to the control element via a control transmission train, said control element influencing the response of the vehicle about a defined axis,
- a sensor for sensing a positioning signal representative of the position of said control element, and
- a sensor for sensing the rate of rotation of the vehicle about the defined axis,
- a controller (18; 18a) in which, forming a theoretical positioning signal by means of filtering the sensed rate of rotation with the inverse ($G_n^{-1}$) of a model ($G_n$) is implemented, the model being a function of the vehicle speed ($v$), and describing a desired dynamic response of the rate of rotation of the vehicle about the defined axis as a function of the position of said control element and in said controller generating a corrective signal and feeding back this corrective signal to the control transmission train is implemented by forming the difference of the positioning signal to the theoretical positioning signal.

**2.** The apparatus as set forth in claim 1, **characterized in that** the response agility of said controller (18; 18a) to undesirable motions of the vehicle about the defined axis is slower within a range of low vehicle speeds ($v$) subsequent to vehicle standstill than at higher vehicle speeds ($v$).

**3.** The apparatus as set forth in claim 2, **characterized in that** the response agility of the controller (18; 18a) to undesirable motions of the vehicle about the defined axis is at least approximately zero within a range of low vehicle speeds and subsequently gradually increasing.

**4.** The apparatus as set forth in any of the preceding claims, **characterized in that** said controller (18; 18a) is configured with a bandpass filter assembly (34, 38; 34a, 38a) to achieve a response agility featuring a bandpass characteristic with respect to undesirable motions about the defined axis.

**5.** The apparatus as set forth in claim 1 as a steering apparatus for a road vehicle, comprising

- a steering transmission train (12; 12a) serving as a control transmission train with a steering actuator (10; 10a) connected to at least one steered wheel (14; 14a) of the vehicle,
- a yaw rate sensing means (22; 22a) furnishing a yaw rate signal representative of the yaw rate (r) of the vehicle,
- a road wheel steer angle sensing means (20; 20a), furnishing information as to the road wheel steer angle ($\delta$) of said steered wheel (14; 14a), and
- a closed-loop control means (16; 16a) responsive to the yaw rate signal and the information as to the road wheel steer angle and influencing the steering transmission train, said closed-loop control means (16; 16a) triggering an independent steering intervention on occurence of undesirable yaw motions of the vehicle in the sense of reducing said yaw motions,

**characterized in that**
said closed-loop control means (16; 16a) comprises a controller (18; 18a) supplied with the yaw rate signal ($r$) and the information as to the road wheel steer angle which furnishes a signal ($\delta_c$) correcting the road wheel steer angle representative of the undesirable yaw motions, that for filtering the yaw rate signal the inverse ($G_n^{-1}$) of a model ($G_n$) of the yaw dynamics is embedded in said controller (18; 18a) which is independent of the vehicle speed ($v$) and which describes a desired dynamic function of the yaw rate of the vehicle as a function of the road wheel steer angle ($\delta$) of the steered wheel (14; 14a), and that said closed-loop control means (16; 16a) is devised to produce the steering intervention as a function of the signal ($\delta_c$) correcting the road wheel steer angle.

**6.** The steering apparatus as set forth in claim 5, **characterized in that** the response agility of said controller (18; 18a) to undesirable yaw motions of the vehicle is slower within a range of low vehicle speeds (v) subsequent to vehicle standstill than at higher vehicle speeds (v).

**7.** The steering apparatus as set forth in claim 6, **characterized in that** the response agility of said controller (18; 18a) to undesirable yaw motions of the vehicle is at least approximately zero within a range of low vehicle speeds and subsequently gradually increasing.

**8.** The steering apparatus as set forth in any of the claims 5 to 7, **characterized in that** said controller (18; 18a) is configured with a bandpass filter assembly (34, 38; 34a, 38a) to achieve a response agility featuring a bandpass characteristic with respect to undesirable yaw motions of the vehicle.

**9.** The steering apparatus as set forth in any of the claims 5 to 8, **characterized in that** said controller (18; 18a) is formed on the basis of the yaw dynamics of a linearized two-wheeled model of the vehicle (FIG. 8).

**10.** A method of closed-loop controlling the dynamic response of a vehicle about a defined axis,
the vehicle comprising an actuator for activating a variable control element, said actuator being connected to said control element via a control transmission train said control element influencing the response of the vehicle about the defined axis,
comprising the following steps:

- sensing a positioning signal representative of the position of said control element, and
- sensing the rate of rotation of the vehicle about the defined axis,
- forming a theoretical positioning signal by means of filtering the sensed rate of rotation with the inverse ($G_n^{-1}$) of a model ($G_n$), said model being a function of the vehicle speed (v), and describing a desired dynamic response of the rate of rotation of the vehicle about the defined axis as a function of the position of said control element
- calculating a corrective signal by forming the difference of the positioning signal to the theoretical positioning signal calculated by filtering the sensed rate of rotation, and
- feeding back said corrective signal to said control transmission train.

**11.** The method as set forth in claim 10, **characterized in that** a controller (18; 18a) is used whose response agility to undesirable motions of the vehicle about the defined axis is slower within a range of low vehicle speeds (v)

subsequent to vehicle standstill and nimble at higher vehicle speeds (v).

12. The method as set forth in claim 11, **characterized in that** a controller (18; 18a) is used whose response agility to undesirable motions of the vehicle about the defined axis is at least approximately zero within a range of low vehicle speeds and subsequently gradually increasing.

13. The method as set forth in any of the claims 10 to 12, **characterized in that** a controller (18; 18a) is used configured with a bandpass filter assembly (34, 38; 34a, 38a) to achieve a response agility featuring a bandpass characteristic with respect to undesirable motions of the vehicle about the defined axis.

14. The method as set forth in claim 10 for steering a road vehicle,
comprising a steering transmission train (12; 12a) serving as a control transmission train with a steering actuator (10; 10a) connected to at least one steered wheel (14; 14a) of the vehicle, the method furnishing a yaw rate signal representative of the yaw rate (r) of the vehicle and information as to the road wheel steer angle ($\delta$) of said steered wheel (14; 14a) and, on occurence of undesirable yaw motions of the vehicle, triggering an independent steering intervention to the steering transmission train (12; 12a) as a function of the yaw rate signal and of the information as to the road wheel steer angle in the sense of reducing said undesirable yaw motions, **characterized in that** by means of a controller (18; 18a) supplied with said yaw rate signal and said information as to the road wheel steer angle a signal ($\delta_c$) correcting said road wheel steer angle representative of said undesirable yaw motions is determined, whereby
for filtering said yaw rate signal the inverse ($G_n^{-1}$) of a model ($G_n$) is embedded in said controller (18; 18a) which describes a desired dynamic function of the yaw rate of the vehicle as a function of the road wheel steer angle ($\delta$) of said steered wheel (14; 14a) and which is independent of the vehicle speed (v), and
triggering said steering intervention as a function of the signal ($\delta_c$) correcting said road wheel steer angle.

15. The method as set forth in claim 14, **characterized in that** a controller (18; 18a) is used whose response agility to undesirable yaw motions of the vehicle is slower within a range of low vehicle speeds (v) subsequent to vehicle standstill and is nimble at higher vehicle speeds (v).

16. The method as set forth in claim 15, **characterized in that** a controller (18; 18a) is used whose response agility to undesirable yaw motions of the vehicle is at least approximately zero within the range of low vehicle speeds and subsequently gradually increasing.

17. The method as set forth in any of the claims 14 to 16, **characterized in that** a controller (18; 18a) is used configured with a bandpass filter assembly (34, 38; 34a, 38a) to achieve a response agility featuring a bandpass characteristic with respect to undesirable vehicle yaw motions.

18. The method as set forth in any of the claims 14 to 17, **characterized in that** a controller (18; 18a) is used formed on the basis of the yaw dynamics of a linearized two-wheeler model of the vehicle (FIG. 8).

19. A computer software product, **characterized in that** when implemented in a computer it permits executing a method as set forth in any of the claims 14 to 19.

**Revendications**

1. Dispositif asservi permettant de commander le comportement dynamique d'un véhicule autour d'un axe défini, présentant :

   - un organe d'actionnement permettant d'amorcer un élément de commande réglable, l'organe d'actionnement étant relié à l'élément de commande par un faisceau de transmission de commande et l'élément de commande influençant le comportement du véhicule autour de l'axe défini,
   - un capteur permettant de détecter un signal de réglage représentatif de la position de l'élément de commande, et
   - un capteur permettant de détecter le taux de rotation du véhicule autour de l'axe défini,

   un régulateur (18 ; 18a), dans lequel la formation d'un signal de réglage théorique est implémentée par filtrage du taux de rotation détecté avec l'inverse ($G_n^{-1}$) d'un modèle ($G_n$), ce modèle dépendant de la vitesse du véhicule (v) et décrivant un comportement dynamique souhaité du taux de rotation du véhicule autour de l'axe défini en fonction de la position de l'élément de commande, et dans lequel régulateur la production d'un signal de correction et le retour de ce signal de correction au faisceau de transmission de commande est implémentée par la différence entre le signal de réglage et le signal de réglage théorique.

**2.** Dispositif selon la revendication 1, **caractérisé en ce que** la sensibilité de réponse du régulateur (18 ; 18a) à des mouvements indésirables du véhicule autour de l'axe défini, dans les limites d'un domaine de vitesse lente du véhicule (*v*) consécutif à un arrêt du véhicule, est plus faible que lors de vitesses plus élevées du véhicule (v).

**3.** Dispositif selon la revendication 2, **caractérisé en ce que** la sensibilité de réponse du régulateur (18 ; 18a) à des mouvements indésirables du véhicule autour de l'axe défini est au moins approximativement égale à zéro dans les limites du domaine de vitesse lente du véhicule puis augmente peu à peu par la suite.

**4.** Dispositif selon l'une quelconque des revendications précédentes, **caractérisé en ce que** le régulateur (18 ; 18) est configuré avec une disposition de filtre passe-bande (34, 38 ; 34a, 38a) pour obtenir une sensibilité de réponse, présentant un caractère de passe-bande, à des mouvements indésirables autour de l'axe défini.

**5.** Dispositif selon la revendication 1 en tant que dispositif de direction pour un véhicule routier, comprenant

- un organe d'actionnement de direction (10 ; 10a) relié à au moins une roue directrice (14 ; 14a) du véhicule par l'intermédiaire d'un faisceau de transmission de direction (12 ; 12a) servant de faisceau de transmission de commande,
- un dispositif de détection d'un taux de lacet (22 ; 22a) qui fournit un signal de taux de lacet représentatif du taux de lacet (r) du véhicule,
- un dispositif de détection de l'angle de direction des roues (20 ; 20a) qui fournit des informations sur l'angle de direction des roues par l'intermédiaire de l'angle de direction ($\delta$) de la roue directrice (14 ; 14a), et
- un dispositif de réglage (16 ; 16a) qui répond au signal de taux de lacet et aux informations sur l'angle de direction des roues et agit sur le faisceau de transmission de direction (12 ; 12a), dispositif qui est conçu pour provoquer, en cas d'apparition de mouvements de lacet indésirables du véhicule, une intervention de direction indépendante dans le sens d'une réduction de ces mouvements de lacet, **caractérisé en ce que**

le dispositif de réglage (16 ; 16a) englobe un régulateur (18 ; 18a) alimenté par le signal de taux de lacet (r) et les informations sur l'angle de direction des roues, régulateur qui fournit un signal de correction de l'angle de direction des roues ($\delta c$) représentatif des mouvements de lacets indésirables,
dans le régulateur (18 ; 18a), l'inverse ($G_n{}^{-1}$) d'un modèle ($G_n$) de la dynamique de lacet est implémenté pour filtrer le signal de taux de lacet, modèle qui dépend de la vitesse du véhicule (*v*) et qui décrit une relation de dépendance dynamique souhaité entre le taux de lacet du véhicule et l'angle de direction ($\delta$) de la roue directrice (14 ; 14a), et le dispositif de réglage (16 ; 16a) est agencé pour provoquer l'intervention de la direction en fonction du signal de correction de l'angle de direction des roues ($\delta c$).

**6.** Dispositif de direction selon la revendication 5, **caractérisé en ce que** la sensibilité de réponse du régulateur (18 ; 18a) à des mouvements de lacet indésirables du véhicule est plus faible dans les limites d'un domaine lent de la vitesse du véhicule faisant suite à un arrêt du véhicule (*v*) qu'en cas de vitesses plus élevées du véhicule (*v*).

**7.** Dispositif de direction selon la revendication 6, **caractérisé en ce que** la sensibilité de réponse du régulateur (18 ; 18a) à des mouvements de lacet indésirables du véhicule est au moins approximativement nulle dans les limites du domaine de vitesse lente puis augmente progressivement par la suite.

**8.** Dispositif de direction selon l'une quelconque des revendications 5 à 7 **caractérisé en ce que** le régulateur (18 ; 18a) est réalisé avec un dispositif de filtre passe-bande (34, 38 ; 34a, 38a) pour obtenir une sensibilité de réponse, présentant un caractère de passe-bande, à des mouvements de lacet indésirables du véhicule.

**9.** Dispositif de direction selon l'une quelconque des revendications 5 à 8, **caractérisé en ce que** le régulateur (18 ; 18a) est formé sur la base de la dynamique de lacet d'un modèle mono-voie linéarisé du véhicule (Fig. 8).

**10.** Procédé de réglage du comportement dynamique d'un véhicule autour d'un axe défini,
le véhicule présentant un organe d'actionnement pour commander un élément de commande réglable, l'organe d'actionnement étant relié à l'élément de commande par l'intermédiaire d'un faisceau de transmission de commande et l'élément de commande influençant le comportement du véhicule autour de l'axe défini, les étapes suivantes étant réalisées :

- détection d'un signal de réglage représentatif de la position de l'élément de commande, et
- détection du taux de rotation du véhicule autour de l'axe défini,

formation d'un signal de réglage théorique par filtrage du taux de rotation détecté avec l'inverse ($G_n^{-1}$) d'un modèle ($G_n$), ce modèle étant dépendant de la vitesse du véhicule (v) et décrivant un comportement dynamique souhaité du taux de rotation du véhicule autour de l'axe défini en fonction de la position de l'élément de commande,

- calcul d'un signal de correction par la différence entre le signal de réglage et le signal de réglage théorique, qui est calculé par filtrage du taux de rotation détecté et
- retour du signal de correction par le faisceau de transmission de commande.

11. Procédé selon la revendication 10, **caractérisé en ce qu'**on utilise un régulateur (18 ; 18a) dont la sensibilité de réponse répondant à des mouvements indésirables du véhicule autour de l'axe défini est plus faible dans les limites d'un domaine de vitesse lente du véhicule (v), faisant suite à un arrêt du véhicule, et plus grande à des vitesses plus importantes du véhicule (v).

12. Procédé selon la revendication 11, **caractérisé en ce qu'**on utilise un régulateur (18 ; 18a) dont la sensibilité de réponse à des mouvements indésirables du véhicule autour de l'axe défini est au moins approximativement nulle dans les limites du domaine de vitesse lente et augmente peu à peu par la suite.

13. Procédé selon l'une quelconque des revendications 10 à 12, **caractérisé en ce qu'**on utilise un régulateur (18 ; 18a) qui est réalisé pour obtenir une sensibilité de réponse présentant un caractère de passe-bande, à des mouvements indésirables du véhicule autour de l'axe défini, avec un dispositif de filtre passe-bande (34, 38 ; 34a ; 38a).

14. Procédé selon la revendication 10 pour assurer la direction d'un véhicule routier lequel comporte un organe d'actionnement de direction (10 ; 10a) relié à au moins une roue directrice (14 ; 14a) du véhicule par l'intermédiaire d'un faisceau de transmission de direction (12 ; 12a) servant de faisceau de transmission. de commande, un signal de taux de lacet, représentatif du taux de lacet (r) du véhicule et des informations sur l'angle de direction des roues (δ) de la roue directrice (14 ; 14a) étant fournis lors du procédé et, lorsque des mouvements de lacet indésirables du véhicule apparaissent, une intervention indépendante de direction étant provoquée sur le faisceau de transmission de direction (12 ; 12a) en fonction du signal de taux de lacet et des informations sur l'angle de direction des roues dans le sens d'une réduction de ces mouvements de lacet indésirables, **caractérisé en ce qu'**au moyen d'un régulateur (18 ; 18a) alimenté par le signal de taux de lacet et les informations sur l'angle de braquage des roues, un signal de correction de l'angle de direction des roues ($δ_c$) représentatif des mouvements de lacet indésirables est déterminé,
tandis que, dans le régulateur (18 ; 18a), pour filtrer le signal de taux de lacet, l'inverse ($G_n^{-1}$) d'un modèle ($G_n$) est implémenté, modèle qui décrit une relation de dépendance dynamique souhaité entre le taux de lacet du véhicule et l'angle de direction (δ) de la roue directrice (14 ; 14a) et qui dépend de la vitesse du véhicule (v) et l'intervention de la direction est provoquée en fonction de ce signal de correction de l'angle de braque des roues ($δ_c$).

15. Procédé selon la revendication 14, **caractérisé en ce qu'**on utilise un régulateur (18 ; 18a) dont la sensibilité de réponse à des mouvements de lacet indésirables du véhicule est plus faible dans les limites d'un domaine lent de la vitesse du véhicule (v), faisant suite à un arrêt du véhicule et plus grande à des vitesses du véhicule (v) plus importantes.

16. Procédé selon la revendication 15, **caractérisé en ce qu'**on utilise un régulateur (18 ; 18a) dont la sensibilité de réponse à des mouvements de lacet indésirables du véhicule est au moins approximativement nulle dans les limites du domaine de vitesse lente puis augmente peu à peu par la suite.

17. Procédé selon l'une quelconque des revendications 14 à 16, **caractérisé en ce qu'**on utilise un régulateur (18 ; 18a) qui est réalisé pour obtenir, avec une disposition de filtre passe-bande (34, 38 ; 34a, 38a), une sensibilité de réponse, présentant un caractère passe-bande, à des mouvements de lacet indésirables du véhicule.

18. Procédé selon l'une quelconque des revendications 14 à 17, **caractérisé en ce qu'**on utilise un régulateur (18 ; 18a) basé sur la dynamique de lacet d'un modèle mono-voie linéarisé du véhicule (Fig. 8).

**19.** Produit logiciel, **caractérisé en ce qu'**il permet la réalisation d'un procédé selon l'une quelconque des revendications 14 à 19 lorsqu'il est implémenté dans un calculateur.

Fig.1

Fig.2

# Fig.3

$$C_3 = \frac{C_1}{G_n}$$

Fig.4

Fig.5

EP 1 215 103 B1

# Fig.6

# Fig.8

Fig. 7